(19) Europäisches Patentamt
European Patent Office
Office européen des brevets

(11) **EP 4 501 878 A1**

(12) **EUROPEAN PATENT APPLICATION**
published in accordance with Art. 153(4) EPC

(43) Date of publication:
**05.02.2025   Bulletin 2025/06**

(21) Application number: 23774887.6

(22) Date of filing: **20.03.2023**

(51) International Patent Classification (IPC):
**C04B 7/02** (2006.01)     **C04B 7/24** (2006.01)
**C04B 7/38** (2006.01)     **C04B 14/06** (2006.01)
**C04B 14/28** (2006.01)     **C04B 18/08** (2006.01)
**C04B 18/14** (2006.01)

(52) Cooperative Patent Classification (CPC):
**C04B 7/02; C04B 7/24; C04B 7/38; C04B 14/06;
C04B 14/28; C04B 18/08; C04B 18/14**

(86) International application number:
**PCT/JP2023/010954**

(87) International publication number:
**WO 2023/182292 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  25.03.2022  JP 2022049377

(71) Applicant: TOKUYAMA CORPORATION
**Yamaguchi 745-8648 (JP)**

(72) Inventors:
• **OTA, Masami**
  **Shunan-shi, Yamaguchi 745-8648 (JP)**
• **CHABAYASHI, Takashi**
  **Shunan-shi, Yamaguchi 745-0053 (JP)**

(74) Representative: **Kuhnen & Wacker
Patent- und Rechtsanwaltsbüro PartG mbB
Prinz-Ludwig-Straße 40A
85354 Freising (DE)**

(54) **PORTLAND CEMENT CLINKER, CEMENT COMPOSITION, AND METHOD FOR PRODUCING PORTLAND CEMENT CLINKER**

(57)     A novel cement clinker that is baked at a relatively low temperature, can include a larger amount of wasted materials than conventional cement clinkers, and has a good long term strength development is provided. The cement clinker has the total content of $C_3A$ and $C_4AF$ of 22 mass% or more, a $C_3S$ content of 60 mass% or more, and an iron modulus (I.M.) of 1.3 or under and has an adjusted BaO content of 0.8 to 1.4 mass%.

EP 4 501 878 A1

**Description**

Field of the Invention

The invention relates to a novel cement clinker and a cement composition. In more detail, the invention relates to a cement clinker and a cement composition that exhibit good long-term strength development and are adapted to be baked at a relatively low temperature.

Background Art

The cement industry is a mass-production and mass-consumption type industry, and in recent years, resource saving and energy saving have become a top priority due to environmental issues such as $CO_2$ emissions. For example, Portland cement, the most mass-produced cement, needs a clinker made by baking the raw materials adjusted to a predetermined chemical composition at a temperature as high as 1450 degree Celsius to 1550 degree Celsius. The baking process is the most energy-consuming process. In other words, if the clinker baking temperature is reduced, the energy consumption is reduced. To reduce the baking temperature of clinker, a technology has been developed with increasing $C_4AF$ (4CaO, $Al_2O_3$, $Fe_2O_3$), one of the main clinker minerals, as a low-temperature baking-type clinker (see Patent Document 1).

Further, effective utilization of wastes and by-products have become an important issue from the viewpoint of resource recycling. Taking advantage of the characteristics of the cement industry and cement manufacturing facilities, the reuse of wastes or waste disposal as raw materials or heat energy sources during cement production is effective for the safe and mass disposal of wastes. Many wastes and by-products have high $Al_2O_3$ content. In the above system of increasing $C_4AF$, the $Al_2O_3$ content of the cement clinker is increased compared to conventional Portland cement clinkers, and thus more wastes and by-products are used than in conventional Portland cement clinkers. In this respect, the low-temperature baking-type clinker described in Patent Document 1 has superior characteristics.

Clinker with more $C_3A$ (3CaO-$Al_2O_3$) or $C_4AF$ among clinker minerals is also advantageous since it contains more $Al_2O_3$ and $Fe_2O_3$, so that more wastes and by-products containing these components can be used (e.g., Patent Document 2).

On the other hand, with utilizing wastes and by-products, the components contained in the wastes and by-products are brought into the cement clinker. Not only CaO, $SiO_2$, $Al_2O_3$, and $Fe_2O_3$, which are the major components of cement clinker, but also other small amounts of components are introduced and affect the easy baking characteristics, actual mineral composition of clinker, and the physical properties of cement. Therefore, appropriate control of the small amount components is required. Results have been disclosed on the influence of small amount components on the physical properties of the low-temperature baking-type clinker (e.g., Non-Patent Document 1). According to the literature, increasing the MnO content in the low-temperature baking-type clinker increases the long-term compressive strength at day 28.

References of Prior Art

    Patent Document 1: Japanese Patent Publication 2012-224504
    Patent Document 2: Japanese Patent Publication 2004-352515

Non-patent Document

Non-Patent Document 1 Masami Ohta et al., Abstracts of the 75th Cement Technology Conference, p.p. 20-21 (2021)

Summary of the Invention

Problem to be solved by the invention

The low-temperature baking-type clinker is baked at a relatively low temperature and can consume a large amount of wastes containing $Al_2O_3$ and $Fe_2O_3$. However, the $C_2S$ (2CaO-$SiO_2$) content, which has been considered to contribute to long-term strength development, is reduced compared to conventional Portland cement clinkers, for example, having the total $C_3A$ and $C_4AF$ content of about 20 mass% or less. As a result, the long-term strength development has tended to be lower to some extent. It is possible to increase the long-term strength development by adjusting the MnO content in the low-temperature baking-type clinker, as shown in Non-Patent Document 1. However, regarding other small content components, the long-term strength development is not clear. Therefore, the object of the invention is to provide a novel clinker baked at a relatively low temperature and has good long-term strength development.

Means for Solving the Problem

The present inventors have studied diligently to solve the above problem and have found that when the low-temperature baking-type clinker has an adjusted BaO content of 0.8 to 1.4 mass% the clinker has a good long-term strength development compared to conventional low-temperature baking-type clinker, which has a small or no BaO content (low-temperature baking-type clinker with small BaO content).

According to the first aspect of the present invention, a novel Portland cement clinker having the total $C_3A$ and $C_4AF$ content of 22 mass% or more, the $C_3S$ ($3C_3S \cdot SiO_2$) content of 60 mass% or more, the iron modulus (I.M.) of 1.3 or less, calculated according to the Bogue's formulae, is provided and the cement clinker has the BaO content of 0.8 to 1.4 mass%. Preferably, the cement clinker has a $C_4AF$ content of 15 mass% or more. The total $C_3S$ and $C_2S$ content is preferably 69 mass% or more.

According to the second aspect of the present invention, the Portland cement clinker has the total $C_3A$ and $C_4AF$ content of 22 mass% or more, a $C_3S$ modulus of 60 mass% or more, an iron modulus (I.M.) of 1.3 or less, respectively calculated according to the Bogue's formulae, and a BaO content of 0.8 to 1.4 mass%. To the Portland cement clinker, gypsum is added to produce a cement composition. The cement composition preferably contains one or more of the following admixtures selected from the group comprising blast furnace slag, siliceous admixture, fly ash, and limestone.

Furthermore, according to the third aspect of the present invention, a novel low-temperature baking-type Portland cement clinker is produced by baking, at a temperature not less than 1300 degree Celsius and less than 1400 degree Celsius, the raw material comprising a CaO source, an $SiO_2$ source, an $Al_2O_3$ source, a $Fe_2O_3$ source, and a BaO source, having the total $C_3A$ and $C_4AF$ content after baking of 22 mass% or more, the $C_3S$ content of 60 mass% or more, the iron modulus (I.M.) of 1.3 or less, respectively calculated according to the Bogue's formulae, and a BaO content of 0.8 to 1.4 mass%, in Portland cement clinker.

Preferably, the Portland cement clinker has the total $C_3A$ and $C_4AF$ content of 22 mass% or more and 32 mass% or less, a $C_3S$ content of 60% mass% or more and 70% mass% or less, and a $C_2S$ content of 3 mass% or more and 18 mass% or less, and the total content of $C_3A$, $C_4AF$, $C_3S$, and $C_2S$ is 100 mass% or less.

The description of Portland cement clinker in this specification applies directly to both the cement composition and the method for producing Portland cement clinker. In principle, compositions are expressed as mass%, and when composition ranges are specified with upper and lower limits, the upper and lower limits are included, unless otherwise specified.

Advantageous Effects of the Invention

According to the present invention, a novel cement clinker is provided such that it is producible by baking at a lower temperatures than conventional cement clinker, can consume an increased amount of waste materials, and has good long-term strength development (mortar compressive strength at day 28) compared to the ordinary low-temperature baking-type clinker with small BaO content.

Means for Solving the Problem

The contents of $C_3A$, $C_4AF$, $C_3S$, and $C_2S$ in Portland cement clinker (simply referred to as "cement clinker") according to the invention are determined according to the Bogue's formulae.

The Bogue's formulae have been used in conjunction with the moduli and indices to calculate the approximate major compound composition using the major chemical analyses, and have been well known to those skilled in the art. For the sake of clarity, the following is how to determine the amount of each mineral in cement clinker using the Bogue's formulae.

$$C_3S \text{ content} = (4.07 \text{ x } CaO) - (7.60 \text{ x } SiO_2) - (6.72 \text{ x } Al_2O_3) - (1.43 \text{ x } Fe_2O_3)$$

$$C_2S \text{ content} = (2.87 \text{ x } SiO_2) - (0.754 \text{ x } C_3S)$$

$$C_3A \text{ content} = (2.65 \text{ x } Al_2O_3) - (1.69 \text{ x } Fe_2O_3)$$

$$C_4AF \text{ content} = 3.04 \times Fe_2O_3$$

The iron modulus (I.M.), hydraulic modulus (H.M.), silica modulus (S.M.), activity index (A.I.), and lime saturation degree (L.S.D.), are obtained using the major chemical compositions and are used as the characteristic values for cement clinker production control, and have been used and well known to those in the art. The calculation method of the iron modulus and so on are described below, as a precaution.

$$\text{Hydraulic Mudulus (H.M.)} \quad = CaO / (SiO_2 + Al_2O_3 + Fe_2O_3)$$

$$\text{Silica Modulus (S.M.)} \quad = SiO_2 / (Al_2O_3 + Fe_2O_3)$$

$$\text{Iron Modulus (I.M.)} \quad = Al_2O_3 / Fe_2O_3$$

$$\text{Activity Index (A.I.)} \quad = SiO_2/Al_2O_3$$

$$\text{Lime saturation Degree (L.S.D.)} \quad = CaO / (2.8 \times SiO_2 + 1.2 \times Al_2O_3 + 0.65 \times Fe_2O_3)$$

CaO, $SiO_2$, $Al_2O_3$, and $Fe_2O_3$ contents in the above can be measured according to the method in accordance with JIS R 5202 "Chemical Analysis Method for Portland Cement" and JIS R 5 204 "X-ray Fluorescence Analysis Method for Cement" respectively.

As mentioned above, in the cement clinker according to the present invention, the contents of $C_3A$ and $C_4AF$ must total 22 mass% or more. If these contents are less than 22 mass%, it becomes difficult to obtain cement clinker with good physical properties such as strength development by baking at the low temperature. A more preferred total content is 24 mass% or more. As described below, 60 mass% or more of $C_3S$ is required to obtain the high-strength development. Therefore, the total content of $C_3A$ and $C_4AF$ is limited up to 40 mass%. Preferably, it is 35 mass% or less, more preferably 32 mass% or less, and especially 28 mass% or less. Of these two components, $C_4AF$ should be present alone at 15 mass% or more, because it can be sintered sufficiently even at low temperatures and the amount of f-CaO in the cement clinker can be reduced.

The $C_3S$ content is extremely important for the good strength development of cement compositions using the cement clinker according to the present invention (hereinafter simply "cement"). If this content is less than 60%, the good strength development cannot be obtained even if the total $C_3A$ and $C_4AF$ content and the iron modulus described below are within the specified range. The $C_3S$ content is preferably 62 mas% or more and more preferably 63 mass% or more. Since the total $C_3A$ and $C_4AF$ content is at least 22 mass%, the upper limit of $C_3S$ content is 78 mass%. In order to ensure some time from the start to the end of condensation, 70 mass% or less is preferred, and 65 mass% or less is further preferred.

The cement clinker may further contain $C_2S$. The content should be not more than 18 mass%, preferably not more than 15 mass%, and not less than 3 mass%. From the viewpoint of obtaining long-term strength, the total content of $C_3S$ and $C_2S$ is especially preferred to be 69 mass% or more.

The iron modulus (I.M.) of the cement clinker is not more than 1.3. If the iron modulus exceeds 1.3, sufficient good strength development (more specifically, for example, mortar strength development) cannot be obtained even if other requirements in the cement clinker according to the present invention are satisfied. Furthermore, if the iron modulus exceeds 1.3, the time from the start of setting to its termination tends to be too long. Therefore, the iron modulus should be not more than1.3. A more preferred iron modulus range is 1.0 to 1.3, and especially preferred is 1.14 to 1.27.

The hydraulic modulus and silica modulus are not particularly limited. However, in order to obtain an excellent balance of various properties, the hydraulic modulus is preferably 1.8 to 2.2, especially 1.9 to 2.1, and the silica modulus is preferably 1.0 to 2.0, especially 1.1 to 1.7.

The most important point in the cement clinker according to the invention is to have a BaO content of 0.8 to 1.4 mass%. The BaO content in cement clinker can be measured using a general X-ray fluorescence analyzer, for example, by quantitative analysis such as a calibration curve method.

When cement clinker with the above composition is prepared with usual raw materials, the cement clinker contains no or very small BaO. In contrast, by increasing the BaO content to 0.8 to 1.4 mass%, the cement clinker exhibits a good long-term strength development, compared to the low-temperature baking-type clinker with small BaO content. The reason for the good long-term strength development is assumed that $C_2S$ in the low-temperature baking-type clinker is mainly in the $\beta$ phase, but the Ba component stabilizes it to $\alpha$ or $\alpha'$ phase and improves the hydration reactivity. The more preferred BaO content is 0.8 to 1.3 mass%, and the particularly preferred BaO content is 0.9 to 1.2 mass%.

The cement clinker according to the present invention containing BaO in the specific range has the characteristic of the good strength development compared to the low-temperature baking-type clinker with small BaO content.

The cement clinker according to the present invention is producible by low-temperature baking, compared to conventional ordinary Portland cement clinker. Namely, while conventional ordinary Portland cement clinkers require a temperature of around 1450 degree Celsius for baking, the cement clinker according to the present invention can be baked at a temperature between 1300-1400 degree Celsius.

The method of producing cement clinker according to the present invention is not particularly limited, and the cement clinker is easily produced by preparing and mixing known cement (clinker) raw materials in a predetermined proportion to achieve of the needed mineral indices and moduli, and baking them in a known method (e.g. with SP kiln, NSP kiln, etc.).

The preparation and mixing method of the cement raw materials can be made according to conventional methods. For example, the composition of wastes, by-products, and other raw materials (CaO sources such as limestone, quicklime, and slaked lime, $SiO_2$ sources such as silica stone, $Al_2O_3$ sources such as clay, $Fe_2O_3$ sources such as copper calamite and titanium calamite, etc.) are measured in advance, and the proportion of the materials is calculated from the proportion of the ingredients in the materials to mix the raw materials according to the proportion.

The raw materials used in the manufacture of cement clinker are the same as those conventionally used in the manufacture of cement clinker, without any particular restrictions. It is also possible to use waste materials, by-products, etc.

In the manufacture of cement clinker, the use of one or more wastes, by-products, etc. is desirable from the viewpoint of promoting the effective use of wastes, by-products, etc. Usable examples of wastes and by-products include blast furnace slag, steelmaking slag, nonferrous tailings, coal ash, sewage sludge, water purification sludge, paper sludge, construction soil, foundry sand, soot, incinerated fly ash, molten fly ash, chlorine bypass dust, wood chips, waste white clay, bota, waste tires, shells, municipal waste, and its incinerated ash, etc. (Note Some of them may be used as the raw materials for cement as well as a source of heat energy.)

In particular, the cement clinker according to the present invention contains the large total content of $C_3A$ and $C_4AF$, which are minerals with $Al_2O_3$ as a constituent element. Therefore, it has the advantage over conventional cement clinker in that it can be produced using more $Al_2O_3$-rich wastes and by-products.

When the compound compositions and moduli are adjusted according to the Bogue's formulae, using the natural raw materials, wastes, and by-products, as described above, the BaO content in the cement clinker after baking does not reach 0.7%. Therefore, the BaO content in the cement clinker is adjusted by analyzing respective BaO contents in the raw materials: the natural raw materials; the wastes; and the by-products, and the ratio between respective raw materials is adjusted to achieve the prescribed BaO content. From the viewpoint of promoting effective use of wastes and by-products, it is preferable to use more wastes and more by-products with high BaO contents in the production process than before. Barium sulfate, barium carbonate, barium chloride, barium hydroxide, industrial wastes including these barium compounds and soil contaminated with barium are appropriate. Cathode-ray panel glass wastes and sewage sludge incineration ashes are particularly suitable.

However, some discrepancies may occur depending on the clinker baking conditions, and therefore, the chemical composition of the clinker after baking needs to be analyzed to determine the chemical compositions of the raw materials.

The cement clinker according to the present invention is made into cement by mixing it together with gypsum after grinding or grinding separately, as conventional cement clinkers. Ordinary Portland cement, early-strength Portland cement, and ultra-early-strength Portland cement are examples of such cements. In addition to Portland cement, it can also be used as a component of various mixed cements and solidifiers such as soil solidifiers.

When gypsum is added to the cement composition, any gypsum known as a raw material for cement production, such as dihydrate gypsum, semi-hydrate gypsum, and anhydrate gypsum, can be used without any particular restrictions. In the case of Portland cement, it is preferable to add gypsum so that the $SO_3$ content in the Portland cement is 1.5 to 5.0 mass%, and 1.8 to 3 mass% is more preferable. For the method of grinding the above cement clinker and gypsum, known techniques can be used without any particular restrictions.

Materials such as blast furnace slag, siliceous admixture, fly ash, calcium carbonate, limestone, and so on, and a grinding admixture may be added to the cement composition, and then, the resultant mixture may be ground. The cement clinker may be ground first and then, the materials may be mixed. Chlorine bypass dust, and so on, may also be mixed.

The powder degree of the cement composition is not limited, but should be adjusted to 2800-4500 $cm^2$/g in terms of Blaine specific surface area.

If necessary, blast furnace slag, fly ash, etc. can be mixed after grinding to make blast furnace slag cement, fly ash cement, etc.

Embodiments

The following embodiments illustrate the solution and advantageous effects of the present invention, but the invention is not limited to these embodiments.

Comparative Examples 1 and 2 and Embodiments 1 and 2

Cement clinker raw materials were prepared using industrial raw materials, including wastes, and a reagent class $BaCO_3$, and baked at 1360 degree Celsius for 100 minutes to produce cement clinkers. The chemical compositions of the clinkers obtained after calcination are shown in Table 1, and the mineral compositions, according to the Bogue's formulae, and the moduli and indices are shown in Table 2. To 100 mass parts of the cement clinkers, 2.2 mass parts of dihydrate gypsum and 1.8 mass parts of semi-hydrate gypsum were mixed and ground to produce the cements with a Blaine specific surface area of $3200 \pm 50 \text{ cm}^2/\text{g}$. The results of mortar compressive strength measurements for each cement are shown in Table 3.

The measurement methods used were as follows.

(1) Measurement of chemical composition of cement clinker raw materials and cement clinker other than BaO: Measured by X-ray fluorescence analysis method according to JIS R 5204.
(2) Measurement of BaO content of cement clinker: Measured by quantitative analysis using a scanning X-ray fluorescence spectrometer (ZSX Primus IV, Rigaku Corporation) with a calibration curve.
(3) Measurement of mortar compressive strength: Measured by the method according to JIS R 5201.

Table1

| | Chemical Composition (mass%) | | | | | | | | | | | | |
|---|---|---|---|---|---|---|---|---|---|---|---|---|---|
| | BaO | $SiO_2$ | $Al_2O_3$ | $Fe_2O_3$ | CaO | MgO | $SO_3$ | $Na_2O$ | $K_2O$ | $TiO_2$ | $P_2O_5$ | SrO | Cl |
| Comp.Ex. 1 | 0.0 | 19.60 | 7.00 | 5.61 | 65.54 | 0.87 | 0.18 | 0.17 | 0.29 | 0.34 | 0.12 | 0.04 | 0 |
| Comp. Ex. 2 | 0.59 | 19.70 | 7.06 | 5.58 | 65.40 | 0.89 | 0.15 | 0.16 | 0.31 | 0.35 | 0.12 | 0.04 | 0 |
| Emb.1 | 0.89 | 19.81 | 7.04 | 5.59 | 65.21 | 0.90 | 0.16 | 0.18 | 0.33 | 0.37 | 0.13 | 0.04 | 0 |
| Emb.2 | 1.15 | 19.75 | 7.01 | 5.56 | 65.34 | 0.90 | 0.15 | 0.18 | 0.35 | 0.36 | 0.12 | 0.04 | 0 |

Table 2

| | Mineral Composition according to Bogue's Formulae | | | | Moduli· Indices | | |
|---|---|---|---|---|---|---|---|
| | $C_3S$ | $C_2S$ | $C_3A$ | $C_4AF$ | H.M. | S.M. | I.M |
| Comp.Ex. 1 | 63 | 9 | 9 | 17 | 2.03 | 1.55 | 1.25 |
| Comp.Ex. 2 | 61 | 11 | 9 | 17 | 2.02 | 1.56 | 1.27 |
| Emb.1 | 60 | 12 | 9 | 17 | 2.01 | 1.57 | 1.26 |
| Emb.2 | 61 | 11 | 9 | 17 | 2.02 | 1.57 | 1.26 |

Table 3

| | Day 28 Mortar Compressive Strength (N/mm$^2$) |
|---|---|
| Comp.Ex. 1 | 58.3 |
| Comp.Ex. 2 | 58.0 |
| Emb. 1 | 60.2 |
| Emb. 2 | 60.0 |

Comparative Example 1 is a low-temperature baking-type clinker that does not contain BaO. The results of the embodiments and the comparative examples shall be discussed based on the result of the Comparative Example 1.

Comparative Example 2 has a BaO content of less than 0.7 mass%, and the mortar compressive strength at day 28 is equivalent to that of Comparative Example 1.

The Embodiments 1 and 2 are of the present invention, and the mortar compressive strengths of the cements at day 28 are higher than that of Comparative Example 1.

**Claims**

1. A Portland cement clinker having the total $C_3A$ and $C_4AF$ content of 22 mass% or more, a $C_3S$ content of 60 mass% or more, an iron modulus (I.M.) of 1.3 or less, respectively calculated according to the Bogue's formulae, and a BaO content of 0.8 to 1.4 mass%,.

2. The Portland cement clinker according to claim 1, wherein the $C_4AF$ content is 15 mass% or more.

3. The Portland cement clinker according to claim 1 or 2, **characterized in that** the total $C_3S$ and $C_2S$ content is 69 mass% or more.

4. The Portland cement clinker according to claim 1, **characterized in that** the total $C_3A$ and $C_4AF$ content is not less than 22 mass% and not more than 32 mass%, the $C_3S$ content is not less than 60% mass and not more than 70% mass, a $C_2S$ content is not less than 3% mass and not more than 18 mass%, and a sum of the total $C_3A$ and $C_4AF$ content, the $C_3S$ content, and the $C_2S$ content is not more than 100% mass%.

5. A cement composition comprising the Portland cement clinker according to one of claims 1 to 4, further comprising gypsum.

6. The cement composition according to claim 5, further comprising at least one admixture selected from the group comprising blast furnace slag, siliceous admixture, fly ash, and limestone.

7. A method for producing Portland cement clinker,

   mixing a CaO source, an $SiO_2$ source, an $Al_2O_3$ source, a $Fe_2O_3$ source, and a BaO source to a mixture

   such that the total $C_3A$ and $C_4AF$ content is 22 mass% or more, a $C_3S$ content is 60 mass% or more an iron modulus (I.M.) is 1.3 or less, respectively calculated according to the Bogue's formulae, and a BaO content is not less than 0.8 mass% and not more than 1.4 mass%, in Portland cement clinker after baking, and

   baking the mixture at a temperature not less than 1300 degree Celsius and less than 1400 degree Celsius.

8. The method for producing Portland cement clinker according to claim 7, **characterized by** mixing the CaO source, the $SiO_2$ source, the $Al_2O_3$ source, the $Fe_2O_3$ source, and the BaO source to the mixture

   such that the total $C_3A$ and $C_4AF$ content is 22 mass% or more and 32 mass% or less, the $C_3S$ content is 60 mass% or more and 70 mass % or less, a $C_2S$ content is 3 mass% or more and 18 mass% or less, and a sum of the total $C_3A$ and $C_4AF$ content, the $C_3S$ content, and the $C_2S$ content is not more than 100% mass%.

## INTERNATIONAL SEARCH REPORT

| International application No. |
| --- |
| **PCT/JP2023/010954** |

| A. | CLASSIFICATION OF SUBJECT MATTER |
| --- | --- |

*C04B 7/02*(2006.01)i; *C04B 7/24*(2006.01)i; *C04B 7/38*(2006.01)i; *C04B 14/06*(2006.01)i; *C04B 14/28*(2006.01)i;
*C04B 18/08*(2006.01)i; *C04B 18/14*(2006.01)i
FI: C04B7/02; C04B7/38; C04B14/06 Z; C04B14/28; C04B18/08 Z; C04B18/14 A; C04B7/24

According to International Patent Classification (IPC) or to both national classification and IPC

| B. | FIELDS SEARCHED |
| --- | --- |

Minimum documentation searched (classification system followed by classification symbols)

C04B7/02; C04B7/24; C04B7/38; C04B14/06; C04B14/28; C04B18/08; C04B18/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2012/144497 A1 (TOKUYAMA CORP.) 26 October 2012 (2012-10-26) <br> claim 1, paragraph [0013] | 1-8 |
| Y | JP 2015-067490 A (TAIHEIYO CEMENT CORP.) 13 April 2015 (2015-04-13) <br> claim 1, paragraph [0023] | 1-8 |
| Y | JP 2011-079710 A (TAIHEIYO CEMENT CORP.) 21 April 2011 (2011-04-21) <br> claim 1, paragraph [0006] | 1-8 |
| A | JP 2016-190752 A (SUMITOMO OSAKA CEMENT CO., LTD.) 10 November 2016 <br> (2016-11-10) <br> paragraphs [0062], [0072] | 1-8 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 May 2023** | **23 May 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** |  |
|  | Telephone No. |

Form PCT/ISA/210 (second sheet) (January 2015)

INTERNATIONAL SEARCH REPORT
Information on patent family members

International application No.

**PCT/JP2023/010954**

| Patent document cited in search report | | | Publication date (day/month/year) | Patent family member(s) | Publication date (day/month/year) |
|---|---|---|---|---|---|
| WO | 2012/144497 | A1 | 26 October 2012 | US 8864902 B2 claims 1, column 3, lines 27-32 | |
| JP | 2015-067490 | A | 13 April 2015 | (Family: none) | |
| JP | 2011-079710 | A | 21 April 2011 | (Family: none) | |
| JP | 2016-190752 | A | 10 November 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012224504 A

- JP 2004352515 A

**Non-patent literature cited in the description**

- **MASAMI OHTA et al.** *Abstracts of the 75th Cement Technology Conference*, 2021, 20-21